# EUROPEAN PATENT SPECIFICATION

(11) **EP 4 075 644 B1**
(45) Date of publication and mention of the grant of the patent: **27.12.2023**
(21) Application number: 21744350.6
(22) Date of filing: 21.01.2021
(51) Int. Cl.: F16C 19/00, F16C 23/06, F16C 25/06, H02K 7/08, H02K 16/02, H02K 49/10, H02K 1/17, H02K 7/09, H02K 11/21, F16C 1/00

(54) **MAGNETIC-GEARED ELECTRIC ROTARY MACHINE**
ELEKTRISCHE DREHMASCHINE MIT MAGNETISCHEM GETRIEBE
MACHINE TOURNANTE ÉLECTRIQUE À ENGRENAGE MAGNÉTIQUE

(30) Priority: 24.01.2020 JP 2020010232
(43) Date of publication of application: 19.10.2022
(73) Proprietor: Mitsubishi Heavy Industries, Ltd., Tokyo 100-8332 (JP)
(72) Inventor: UMEDA, Akihiko, Tokyo 100-8332 (JP)
(74) Representative: Hoffmann Eitle
(86) International application number: PCT/JP2021/002000
(87) International publication number: WO 2021/149756

(56) References cited:
- GB-A- 1 478 868
- JP-A- 2003 534 511
- JP-A- 2006 211 837
- JP-A- 2014 163 431
- US-A1- 2010 253 272
- US-A1- 2012 262 095
- US-A1- 2013 002 063
- US-A1- 2015 048 725
- US-A1- 2016 006 304

## Description

### Technical Field

The present disclosure relates to a magnetic geared rotary electric machine.

Priority is claimed on Japanese Patent Application No. 2020-010232, filed January 24, 2020.

### Background Art

JP 2014-163431 A (or US2016/006304A1 belonging to the same patent family) discloses a magnetic geared rotary electric machine in which a low-speed rotor (first rotor), a high-speed rotor (second rotor), and a stator are coaxially rotatable relative to each other.

When the magnetic geared rotary electric machine is used as, for example, a motor, the low-speed rotor, which is an output shaft rotates, at a predetermined reduction ratio due to a harmonic magnetic flux by rotating the high-speed rotor by an electromotive force of a coil provided in the stator.

### Summary of Invention

### Technical Problem

In a magnetic geared rotary electric machine, it is common for the rotor to be rotatably supported with respect to the stator through rolling bearings. However, there may be dimensional tolerances of the stator and rotor, deformation due to its own weight or external force, and wear and dimensional changes due to aging. Therefore, there is concern that an air gap between the stator and the rotor changes. As a result, the stable operation of the magnetic geared rotary electric machine is hindered.

The present disclosure has been made to solve the above-described problems and an object thereof is to provide a magnetic geared rotary electric machine capable of appropriately keeping an air gap for a long period of time.

### Solution to Problem

In order to solve the above-described problems, a magnetic geared rotary electric machine according to the present disclosure includes: a casing; a stator which includes a stator core fixed to the casing and having an annular shape centered on an axis, a coil installed inside a slot of the stator core, and a plurality of stator magnets installed inside the stator core at intervals in a circumferential direction about the axis; a first rotor which includes a plurality of pole pieces provided inside the stator at intervals in the circumferential direction of the axis; a second rotor which includes a rotor core provided inside the first rotor and a plurality of rotor magnets provided in the rotor core at intervals in the circumferential direction; movable bearings which are provided in the casing so as to be arranged at intervals in the circumferential direction and which come into contact with at least one of outer peripheral surfaces of the first rotor and the second rotor; and actuators which move the movable bearings in any direction included in a plane orthogonal to the axis.

### Advantageous Effects of Invention

According to the present disclosure, it is possible to provide a magnetic geared rotary electric machine capable of appropriately keeping an air gap for a long period of time.

### Brief Description of Drawings

FIG. 1 is a cross-sectional view showing a configuration of a magnetic geared rotary electric machine according to a first embodiment of the present disclosure.
FIG. 2 is a cross-sectional view taken along a line II-II of FIG. 1.
FIG. 3 is a view in which the magnetic geared rotary electric machine according to the first embodiment of the present disclosure is viewed from the axis direction.
FIG. 4 is a hardware configuration diagram of a control device according to the first embodiment of the present disclosure.
FIG. 5 is a functional block diagram of the control device according to the first embodiment of the present disclosure.
FIG. 6 is a schematic cross-sectional view showing a configuration of a magnetic geared rotary electric machine according to a second embodiment of the present disclosure.

### Description of Embodiments

### First embodiment

### (Configuration of magnetic geared rotary electric machine)

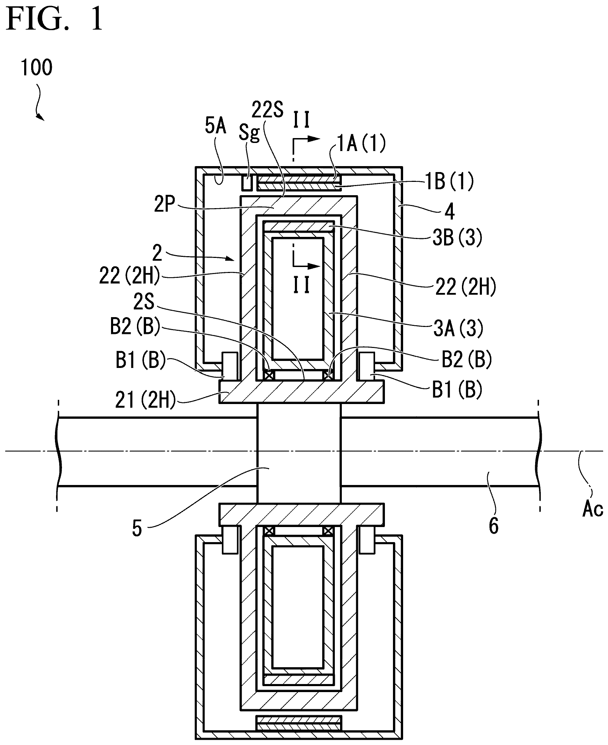

Hereinafter, a magnetic geared rotary electric machine 100 according to a first embodiment of the present disclosure will be described with reference to FIGs. 1 to 5. As shown in FIGs. 1 to 3, the magnetic geared rotary electric machine 100 includes a stator 1, a first rotor 2, a second rotor 3, a casing 4, bearings B, actuators 8, a gap detector Sg, and a control device 90. The magnetic geared rotary electric machine 100 is attached to a rotating shaft 6 extending in an axis Ac. When electric power is supplied from the outside, the magnetic geared rotary electric machine functions as an electric motor by rotating the first rotor 2 and the second rotor 3 around the axis Ac. On the other hand, when a rotational force (torque) is applied to the rotating shaft 6 from the outside, the magnetic geared rotary electric machine functions as a generator by an induced electromotive force accompanying the rotation of the first rotor 2 and the second rotor 3.

### (Configurations of casing and stator)

The casing 4 is formed in an annular shape centered on the axis Ac. A space is formed inside the casing 4. The stator 1 is provided on a surface (casing inner peripheral surface 5A) facing the inside of the radial direction with respect to the axis Ac in the inner peripheral surface of the casing 4.

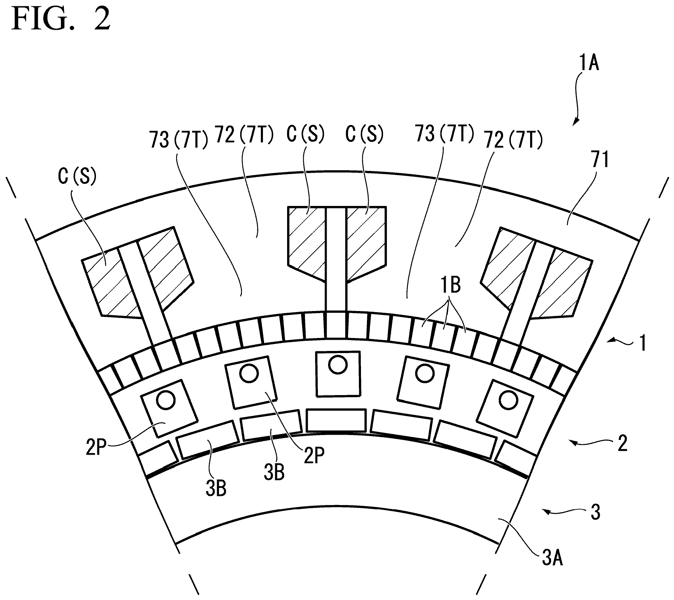

As shown in FIG. 2, the stator 1 includes a stator core 1A, a plurality of coils C, and a plurality of stator magnets 1B. The stator core 1A includes a back yoke 71 which is formed in an annular shape centered on the axis Ac and a plurality of teeth 7T which protrude radially inward from the back yoke 71 and are arranged at intervals in the circumferential direction. Each of the teeth 7T includes a tooth body 72 which is developed radially inward from the back yoke 71 and a tooth top end portion 73 which is integrally formed with the radially inner end portion of the tooth body 72. The tooth top end portion 73 projects toward both sides in the circumferential direction.

The coil C is attached to the tooth body 72. The coil C is formed by winding a copper wire or the like around the tooth body 72. An area which is surrounded by the back yoke 71, the pair of adjacent tooth bodies 72, and the tooth top end portion 73 is a slot S for accommodating the coil C.

The plurality of stator magnets 1B are arranged on the inner peripheral surface of the stator core 1A, that is, the radially inner surface of the tooth top end portion 73 to be adjacent to each other in the circumferential direction. The stator magnet 1B is a permanent magnet such as a ferrite magnet or a neodymium magnet. The poles of the stator magnets 1B adjacent to each other are different. That is, the stator magnets 1B with different poles are arranged alternately in the circumferential direction.

### (Configuration of first rotor)

As shown in FIG. 1, the first rotor 2 is provided inside the stator 1. The first rotor 2 includes a disk portion 5, a first rotor body 2H, and a plurality of pole pieces 2P. The disk portion 5 is formed in a disk shape centered on the axis Ac and is attached to the rotating shaft 6. The first rotor body 2H is attached to the outer peripheral side of the disk portion 5. The first rotor body 2H includes a cylindrical portion 21 which has a cylindrical shape centered on the axis Ac and a pair of support portions 22 which projects radially outward from the outer peripheral surface of the cylindrical portion 21. The cylindrical portion 21 is supported by the inner peripheral surface of the casing 4 through the bearings B (outer bearings B 1) to be described later. The plurality of pole pieces 2P are provided on the radially outer end edges of the pair of support portions 22. The pole piece 2P is a magnetic material and generates a high frequency of magnetic flux by interaction with the magnetic force of the stator magnet 1B and a rotor magnet 3B described later. As shown in FIG. 2, the plurality of pole pieces 2P are provided at intervals in the circumferential direction.

### (Configuration of second rotor)

As shown in FIG. 1, the second rotor 3 is provided between the pair of support portions 22 in the first rotor body 2H. The second rotor 3 includes a rotor core 3A and a plurality of rotor magnet 3B. The rotor core 3Ais formed in an annular shape centered on the axis Ac. The inner peripheral surface of the rotor core 3A is rotatably supported by the outer peripheral surface of the cylindrical portion 21 of the first rotor body 2H through the bearings B (inner bearings B2). As shown in FIG. 2, the plurality of rotor magnets 3B are arranged on the outer peripheral surface of the rotor core 3A in the circumferential direction. Each of the rotor magnet 3B faces the radial outside with respect to the pole piece 2P.

### (Configuration of outer bearing)

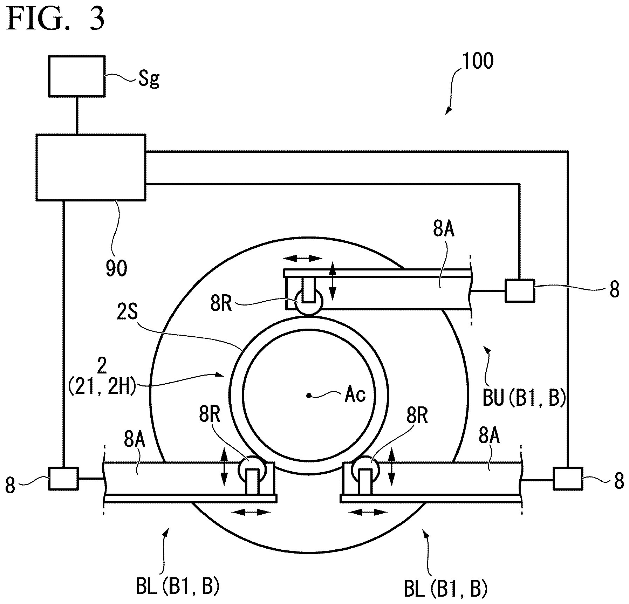

As shown in FIG. 3, the plurality of (three as an example) outer bearings B1 (movable bearings) are provided at intervals in the circumferential direction of the axis Ac. In the example of FIG. 3, a pair of outer bearings B 1 (lower bearings BL) is provided below the axis Ac extending in the horizontal direction and one outer bearing B1 (upper bearing BU) is provided thereabove.

The outer bearings B1 support the outer peripheral surface (cylindrical portion outer peripheral surface 2S) of the cylindrical portion 21 and is movable in any direction included in a plane orthogonal to the axis Ac. Specifically, each of the outer bearings B1 includes a movable support portion 8A and a roller portion 8R. The movable support portion 8A is supported on the casing 4. The movable support portion 8A is formed in a bar shape extending from the casing 4 toward the cylindrical portion 21 within a plane orthogonal to the axis Ac. The roller portion 8R is provided at the front end (the end portion close to the cylindrical portion 21) of the movable support portion 8A. The roller portion 8R is a wheel that can rotate around a rotation axis extending in a direction parallel to the axis Ac. The roller portion 8R rotates while coming into contact with the cylindrical portion outer peripheral surface 2S to support the cylindrical portion 21.

The actuators 8 are attached to base ends (which are end portions on opposite sides to the front ends) of the movable support portions 8A. Specifically, as the actuator 8, a solenoid, a stepping motor, or the like driven by an electric signal received from the outside is preferably used. By driving the actuators 8, the movable support portions 8A are movable in any direction included in a surface orthogonal to the axis Ac. The actuators 8 are operated on the basis of an electric signal transmitted from the control device 90 to be described later. That is, the actuators 8 are electrically connected to the control device 90 by signal lines.

### (Configuration of gap detector)

As shown in FIG. 1, a gap detector Sg is provided on the inner peripheral surface (casing inner peripheral surface 5A) of the casing 4. The gap detector Sg detects an air gap which is a radial separation distance between the stator 1 (stator magnet 1B) and the outer peripheral surface of the first rotor 2 (first rotor outer peripheral surface 22S) in a non-contact state. Specifically, as the gap detector Sg, a capacitive distance sensor is preferably used. The value of the air gap detected by the gap detector Sg is input to the control device 90 described later. That is, the gap detector Sg is electrically connected to the control device 90 by a signal line (see FIG. 3).

### (Configuration of control device)

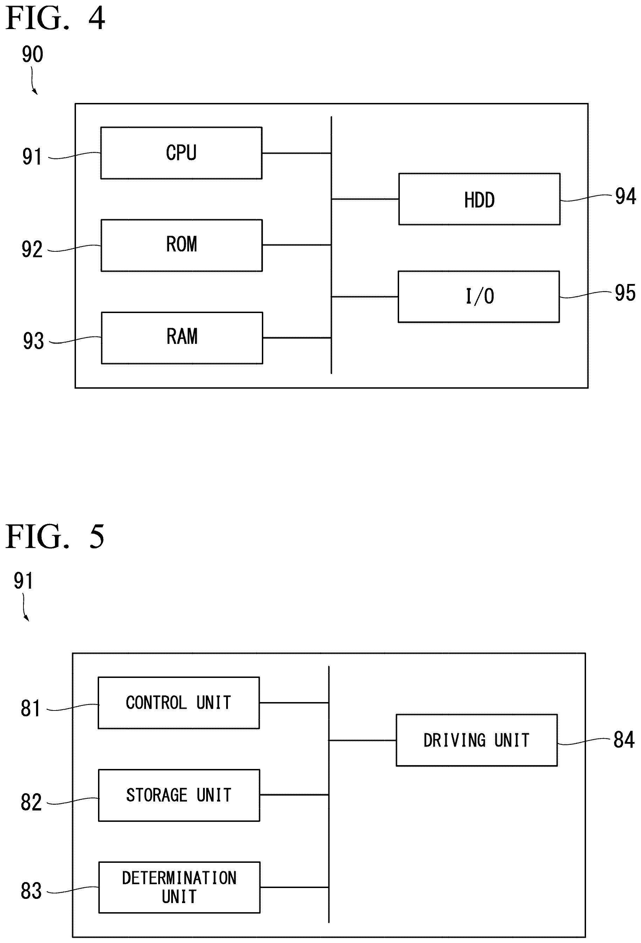

As shown in FIG. 4, the control device 90 is a computer including a central processing unit (CPU) 91, a read-only memory (ROM) 92, a random access memory (RAM) 93, a hard disk drive (HDD) 94, and a signal transmission/reception module 95 (I/O: Input/Output). The signal transmission/reception module 95 receives the value of the air gap detected by the gap detector Sg as an electric signal. Further, the signal transmission/reception module 95 transmits an electric signal for controlling the driving of the actuators 8 to the actuators 8. Additionally, the signal transmission/reception module 95 may transmit and receive an amplified signal via, for example, a charge amplifier or the like.

As shown in FIG. 5, the CPU 91 of the control device 90 includes a control unit 81, a storage unit 82, a determination unit 83, and a driving unit 84 by executing a program stored in the own device in advance. The control unit 81 controls the operations of the storage unit 82, the determination unit 83, and the driving unit 84. The storage unit 82 stores in advance the relationship between the appropriate air gap value and the position coordinates of each outer bearing B1 (roller portion 8R) as a table.

The determination unit 83 determines whether or not to adjust the air gap (that is, to move the outer bearings B1) by the combination of the detection result of the gap detector Sg and the table stored in the storage unit 82. Further, when the outer bearings B1 need to be moved, the determination unit 83 calculates the movement amount thereof. The driving unit 84 drives the actuators 8 on the basis of the determination result of the determination unit 83.

### (Operation and effect)

Next, an operation of the magnetic geared rotary electric machine 100 will be described. When the magnetic geared rotary electric machine 100 is used as an electric motor, electric power is first supplied to the coil C from the outside. Accordingly, the coil C is excited. Due to the magnetic force of the coil C, the second rotor 3 rotates around the axis Ac. Further, when the second rotor 3 rotates, the first rotor 2 rotates. The rotation speed of the first rotor 2 is decelerated under a reduction ratio based on the number of poles Ph of the first rotor 2 and the number of pole pairs Ns of the second rotor 3. Specifically, the reduction ratio G is G=Ph/Ns.

On the other hand, when the magnetic geared rotary electric machine 100 is used as a generator, a rotational force (torque) around the axis Ac is applied to the rotating shaft 6. Accordingly, the first rotor 2 and the second rotor 3 rotate by the rotation of the rotating shaft 6. As the first rotor 2 and the second rotor 3 rotate, an induced electromotive force is generated in the coil C. By taking out this electric power to the outside, the magnetic geared rotary electric machine 100 can be used as a generator.

Incidentally, in the magnetic geared rotary electric machine 100, it is conventionally common that the first rotor 2 is rotatably supported with respect to the stator 1 through a rolling bearing. However, there may be dimensional tolerances of the stator 1 and rotor, deformation due to its own weight or external force, and wear and dimensional changes due to aging. Therefore, there is concern that an air gap between the stator 1 and the first rotor 2 changes. As a result, the stable operation of the magnetic geared rotary electric machine may be hindered.

Here, in this embodiment, a configuration in which the first rotor 2 is supported by the outer bearings B 1 (movable bearing) is adopted. According to this configuration, the outer peripheral surface (the cylindrical portion outer peripheral surface 2S) of the first rotor 2 is supported by the plurality of outer bearings B1. Further, these outer bearings B1 can be moved in any direction included in a plane orthogonal to the axis Ac by driving the actuators 8. Accordingly, when the separation distance (air gap) between the stator 1 and the first rotor 2 changes, it is possible to restore the air gap before the change by moving the outer bearings B1in an appropriate direction in accordance with the change amount of the separation distance. As a result, it is possible to appropriately keep the air gap for a long period of time. Accordingly, it is possible to stably operate the magnetic geared rotary electric machine 100 for a longer period of time.

Further, according to the above-described configuration, it is possible to support the first rotor 2 in a smoothly rotatable state by the roller portion 8R provided at the front end of the movable support portion 8A.

In addition, according to the above-described configuration, the control device 90 drives the actuators 8 on the basis of the detection result of the gap detector Sg. Accordingly, when there is a change in the air gap, this change can be immediately detected and the air gap can be optimized autonomously.

Further, according to the above-described configuration, since the capacitive sensor is used as the gap detector Sg, it is possible to accurately detect the separation distance (air gap) between the stator 1 and the first rotor 2 in a non-contact state. Therefore, the gap detector Sg does not disturb the rotation of the first rotor 2. Accordingly, it is possible to more stably operate the magnetic geared rotary electric machine 100.

The first embodiment of the present disclosure has been described above. Additionally, various changes and modifications can be made to the above configuration as long as it does not deviate from the scope of the appended claims. For example, in the first embodiment, an example has been described in which only the outer bearings B1 are the movable bearings and only the first rotor 2 is supported by the movable bearing. However, a configuration can be adopted in which the inner bearings B2 are also the movable bearings in addition to the outer bearings B1. Further, a configuration can be adopted in which only the inner bearings B2 are the movable bearings. Nevertheless, the first embodiment as such is not included in the scope of the invention because it does not comprise all the features of claim 1, in particular with respect to the rotor shifter 8B as described below.

### Second embodiment

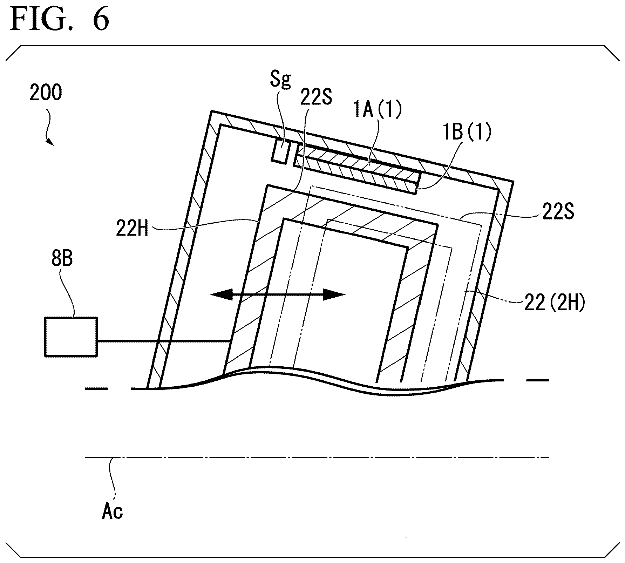

Next, a second embodiment of the present disclosure will be described with reference to FIG. 6. Additionally, the same reference numerals are given to the same configurations as those of the first embodiment described above, and detailed description thereof will be omitted. As shown in the same drawing, in this embodiment, the shapes of the casing 4 and the first rotor 2 are different from those of the first embodiment. The casing 4 and the first rotor 2 are arranged in a direction inclined with respect to the axis Ac. Further, a magnetic geared rotary electric machine 200 according to this embodiment further includes a rotor shifter 8B.

More specifically, the casing 4 and the first rotor body 2H are slantingly extended radially outward from the inside thereof as they approach a first end of the axis Ac from a second end thereof in the direction of the axis Ac. Accordingly, the inner peripheral surface of the stator 1 (stator magnet 1B) is slantingly extended radially inward from the outside thereof as it approaches the first end of the axis Ac from the second end in the direction of the axis Ac. The outer peripheral surface (first rotor outer peripheral surface 22S) of the first rotor 2 facing the inner peripheral surface from the radial direction is also slantingly extended radially inward from the outside thereof as it approaches the first end of the axis Ac from the second end in the direction of the axis Ac.

Further, the first rotor 2 can be shifted in the direction of the axis Ac by the rotor shifter 8B. That is, the first rotor 2 is relatively displaced with respect to the stator 1 by operating the rotor shifter 8B. Although not shown in detail, the operation of the rotor shifter 8B is controlled by the process of the control device 90 based on the detection result of the gap detector Sg as in the configuration described in the first embodiment.

According to the above-described configuration, the inner peripheral surface of the stator 1 and the outer peripheral surface of the first rotor 2 (first rotor outer peripheral surface 22S) are slantingly extended radially inward from the outside thereof as they approach the first end of the axis Ac from the second end in the direction of the axis Ac. Thus, for example, when the first rotor 2 is shifted toward the first end in the direction of the axis Ac, the separation distance (air gap) between the stator 1 and the first rotor 2 changes such that the air gap decreases. In contrast, when the first rotor 2 is shifted toward the second end in the direction of the axis Ac, the air gap between the stator 1 and the first rotor 2 changes such that the air gap increases. In this way, it is possible to easily adjust the air gap just by moving the first rotor 2 by the rotor shifter 8B. As a result, since the air gap is appropriately kept for a long period of time, it is possible to stably operate the magnetic geared rotary electric machine 100.

The second embodiment of the present disclosure has been described above. Additionally, various changes and modifications can be made to the above configuration as long as it does not deviate from the scope of the appended claims. For example, the configuration of the outer bearing B 1 (movable bearing) described in the first embodiment can be combined with the configuration of the second embodiment. Further, in the second embodiment, a configuration has been described in which both the casing 4 and the first rotor 2 are inclined with respect to the axis Ac. However, in order to optimize the air gap by moving the first rotor 2 in the direction of the axis Ac as described above, at least only the inner peripheral surface of the stator 1 and the outer peripheral surface of the first rotor 2 (first rotor outer peripheral surface 22S) may be slantingly extended radially inward from the outside thereof as they approach the first end of the axis Ac from the second end in the direction of the axis Ac. In other words, the configurations of the other members other than the inner peripheral surface and the outer peripheral surface can be appropriately changed according to the design and specifications.

### Appendix

The magnetic geared rotary electric machine 100 described in each embodiment can be summarized as follows, for example.
(1) The magnetic geared rotary electric machine 100 according to a first aspect includes: the casing 4; the stator 1 which includes the stator core 1A fixed to the casing 4 and having an annular shape centered on the axis Ac, the coil C installed inside the slot S of the stator core 1A, and the plurality of stator magnets 1B installed inside the stator core 1A at intervals in the circumferential direction; the first rotor 2 which includes the plurality of pole pieces 2P provided inside the stator 1 at intervals in the circumferential direction of the axis Ac; the second rotor 3 which includes the rotor core 3A provided inside the first rotor 2 and the plurality of rotor magnets 3B provided in the rotor core 3A at intervals in the circumferential direction; movable bearings which are provided in the casing 4 so as to be arranged at intervals in the circumferential direction and which come into contact with at least one of outer peripheral surfaces of the first rotor 2 and the second rotor 3; and the actuators 8 which move the movable bearings in any direction included in a plane orthogonal to the axis Ac.

According to the above-described configuration, at least one of the outer peripheral surfaces of the first rotor 2 and the second rotor 3 is supported by the movable bearings. Further, these movable bearings can be moved in any direction included in a plane orthogonal to the axis Ac by driving the actuators 8. Accordingly, when the separation distance (air gap) between the stator 1 and the first rotor 2 changes, it is possible to restore the air gap before the change by moving the movable bearings in the appropriate direction in accordance with the change amount of the separation distance. As a result, it is possible to appropriately keep the air gap for a long period of time.

(2) In the magnetic geared rotary electric machine 100 according to a second aspect, each of the movable bearings may include the movable support portion 8A which is supported so as to be relatively displaceable with respect to the casing 4 and the roller portion 8R which is provided at the front end of the movable support portion 8A and is rotated while coming into contact with the outer peripheral surface.

According to the above-described configuration, it is possible to support at least one of the first rotor 2 and the second rotor 3 in a smoothly rotatable state by the roller portion 8R provided at the front end of the movable support portion 8A.

(3) The magnetic geared rotary electric machine 100 according to a third aspect may further include: the gap detector Sg which is provided inside the casing 4 and detects the air gap corresponding to the radial separation distance between the first rotor 2 and the stator 1; and the control device 90 which drives the actuators 8 on the basis of the detection result of the gap detector Sg.

According to the above-described configuration, the control device 90 drives the actuators 8 on the basis of the detection result of the gap detector Sg. Accordingly, when there is a change in the air gap, this change can be immediately detected and the air gap can be optimized autonomously.

(4) In the magnetic geared rotary electric machine 100 according to a fourth aspect, the gap detector Sg may be a capacitive sensor.

According to the above-described configuration, since the capacitive sensor is used as the gap detector Sg, it is possible to accurately detect the separation distance (air gap) between the stator 1 and the first rotor 2 in a non-contact state. Therefore, the gap detector Sg does not disturb the rotation of the first rotor 2. Accordingly, it is possible to more stably operate the magnetic geared rotary electric machine 100.

(5) In the magnetic geared rotary electric machine 100 according to a fifth aspect, the inner peripheral surface of the stator 1 and the outer peripheral surface of the first rotor 2 facing the inner peripheral surface from the radial direction thereof may be slantingly extended radially inward from the outside thereof as they approach the first end of the axis Ac from the second end in the direction of the axis Ac and the magnetic geared rotary electric machine may further include the rotor shifter 8B which shifts the first rotor 2 in the direction of the axis Ac.

According to the above-described configuration, the inner peripheral surface of the stator 1 and the outer peripheral surface of the first rotor 2 are slantingly extended radially inward from the outside thereof as they approach the first end of the axis Ac from the second end in the direction of the axis Ac. Thus, for example, when the first rotor 2 is moved to the other side in the direction of the axis Ac, the separation distance (air gap) between the stator 1 and the first rotor 2 changes such that the air gap decreases. In contrast, when the first rotor 2 is moved to one side in the direction of the axis Ac, the air gap between the stator 1 and the first rotor 2 changes such that the air gap increases. In this way, it is possible to easily adjust the air gap just by shifting the first rotor 2 by the rotor shifter 8B.

### Industrial Applicability

According to the present disclosure, it is possible to provide a magnetic geared rotary electric machine capable of appropriately keeping an air gap for a long period of time.

### Reference Signs List

100, 200 Magnetic geared rotary electric machine
1 Stator
1A Stator core
1B Stator magnet
2 First rotor
21 Cylindrical portion
22 Support portion
22S First rotor outer peripheral surface
2H First rotor body
2P Pole piece
2S Cylindrical portion outer peripheral surface
3 Second rotor
3 A Rotor core
3B Rotor magnet
4 Casing
5 Disk portion
5A Casing inner peripheral surface
6 Rotating shaft
8 Actuator
8 A Movable support portion
8B Rotor shifter
8R Roller portion
71 Back yoke
72 Tooth body
73 Tooth top end portion
81 Control unit
82 Storage unit
83 Determination unit
84 Driving unit
90 Control device
91 CPU
92 ROM
93 RAM
94 HDD
95 Signal transmission/reception module
Ac Axis
B Bearing
B1 Outer bearing (movable bearing)
B2 Inner bearing
BL Lower bearing
BU Upper bearing
C Coil
S Slot
Sg Gap detector

## Claims

1. A magnetic geared rotary electric machine (100;200) comprising:
a casing (4);
a stator (1) which includes a stator core (1A) fixed to the casing (4) and having an annular shape centered on an axis (Ac), a coil (C) installed inside a slot (S) of the stator core (1A), and a plurality of stator magnets (1B) installed inside the stator core (1A) at intervals in a circumferential direction about the axis (Ac);
a first rotor (2) which includes a plurality of pole pieces (2P) provided inside the stator (1) at intervals in the circumferential direction of the axis (Ac); and
a second rotor (3) which includes a rotor core (3A) provided inside the first rotor (2) and a plurality of rotor magnets (3B) provided in the rotor core (3A) at intervals in the circumferential direction, **characterized in that**
movable bearings (B1) are provided in the casing (4) so as to be arranged at intervals in the circumferential direction which movable bearings (B1) come into contact with an outer peripheral surface (2S) of the first rotor (2); and
actuators (8) are provided which move the movable bearings (B1) in any direction included in a plane orthogonal to the axis (Ac),
wherein an inner peripheral surface of the stator (1) and an outer peripheral surface (2S) of the first rotor (2) facing the inner peripheral surface from a radial direction thereof are slantingly extended radially inward from the outside thereof as they approach a first end of the axis (Ac) from a second end in a direction of the axis (Ac), and wherein the magnetic geared rotary electric machine (200) further includes a rotor shifter (8B) which shifts the first rotor (2) in the direction of the axis (Ac).

2. The magnetic geared rotary electric machine (100;200) according to claim 1,
wherein each of the movable bearings (B1) includes a movable support portion (8A) which is supported so as to be relatively displaceable with respect to the casing (4) and a roller portion (8R) which is provided at a front end of the movable support portion_ (8A) and is rotated while coming into contact with the outer peripheral surface (2S).

3. The magnetic geared rotary electric machine (100;200) according to claim 1 or 2, further comprising:
a gap detector (Sg) which is provided inside the casing (4) and detects an air gap corresponding to a radial separation distance between the first rotor (2) and the stator (1); and
a control device (90) which drives the actuators (8) on the basis of a detection result of the gap detector (Sg).

4. The magnetic geared rotary electric machine (100;200) according to claim 3, wherein the gap detector (Sg) is a capacitive sensor.

## Patentansprüche

1. Magnetische, getriebene, rotierende elektrische Maschine (100; 200), umfassend:
ein Gehäuse (4);
einen Stator (1), der einen Statorkern (1A) einschließt, der an dem Gehäuse (4) fixiert ist und eine ringförmige Form aufweist, die auf einer Achse (Ac) zentriert ist, eine Spule (C), die innerhalb eines Schlitzes (S) des Statorkerns (1A) installiert ist, und eine Vielzahl von Statormagneten (1B), die innerhalb des Statorkerns (1A) in Intervallen in einer Umfangsrichtung um die Achse (Ac) installiert sind;
einen ersten Rotor (2), der eine Vielzahl von Polschuhen (2P) einschließt, die innerhalb des Stators (1) in Intervallen in der Umfangsrichtung der Achse (Ac) bereitgestellt sind; und
einen zweiten Rotor (3), der einen Rotorkern (3A) einschließt, der innerhalb des ersten Rotors (2) bereitgestellt ist, und eine Vielzahl von Rotormagneten (3B), die in dem Rotorkern (3A) in Intervallen in der Umfangsrichtung bereitgestellt sind, **dadurch gekennzeichnet, dass**
bewegliche Lager (B1) in dem Gehäuse (4) so bereitgestellt sind, dass sie in Intervallen in der Umfangsrichtung angeordnet sind, wobei die beweglichen Lager (B1) mit einer äußeren Umfangsfläche (2S) des ersten Rotors (2) in Kontakt kommen; und
Aktoren (8) bereitgestellt werden, die die beweglichen Lager (B1) in jeder Richtung bewegen, die in einer Ebene orthogonal zur Achse (Ac) eingeschlossen ist,
wobei eine innere Umfangsfläche des Stators (1) und eine äußere Umfangsfläche (2S) des ersten Rotors (2), die der inneren Umfangsfläche aus einer radialen Richtung desselben zugewandt ist, von der Außenseite desselben schräg radial nach innen verlängert sind, wenn sie sich einem ersten Ende der Achse (Ac) von einem zweiten Ende in einer Richtung der Achse (Ac) nähern, und wobei die magnetische getriebene rotierende elektrische Maschine (200) weiter einen Rotorverschieber (8B) einschließt, der den ersten Rotor (2) in Richtung der Achse (Ac) verschiebt.

2. Magnetische getriebene rotierende elektrische Maschine (100; 200) nach Anspruch 1,
wobei jedes der beweglichen Lager (B1) einen beweglichen Stützabschnitt (8A) einschließt, der so gestützt ist, dass er in Bezug auf das Gehäuse (4) relativ verschiebbar ist und einen Rollenabschnitt (8R), der an einem vorderen Ende des beweglichen Stützabschnitts (8A) bereitgestellt ist und rotiert wird, während er in Kontakt mit der äußeren Umfangsfläche (2S) kommt.

3. Magnetische getriebene rotierende elektrische Maschine (100; 200) nach Anspruch 1 oder 2, weiter umfassend:
einen Spaltdetektor (Sg), der im Inneren des Gehäuses (4) bereitgestellt ist und einen Luftspalt erfasst, der einem radialen Trennungsabstand zwischen dem ersten Rotor (2) und dem Stator (1) entspricht; und
eine Steuerungsvorrichtung (90), die die Aktoren (8) auf der Grundlage eines Erfassungsergebnisses des Spaltdetektors (Sg) antreibt.

4. Magnetische getriebene rotierende elektrische Maschine (100; 200) nach Anspruch 3, wobei der Spaltdetektor (Sg) ein kapazitiver Sensor ist.

## Revendications

1. Machine tournante électrique (100 ; 200) à engrenage magnétique comprenant :
un carter(4) ;
un stator (1) qui inclut un noyau de stator (1A) fixé au carter (4) et ayant une forme annulaire centrée sur un axe (Ac), un enroulement (C) installé à l'intérieur d'une encoche (S) du noyau de stator (1A) et une pluralité d'aimants (1B) de stator installés à l'intérieur du noyau de stator (1A) à intervalles dans une direction circonférentielle sur l'axe (Ac) ;
un premier rotor (2) qui inclut une pluralité d'éléments polaires (2P) disposés à l'intérieur du stator (1) à intervalles dans la direction circonférentielle de l'axe (Ac) ; et
un second rotor (3) qui inclut un noyau de rotor (3A) disposé à l'intérieur du premier rotor (2) et une pluralité d'aimants (3B) de rotor disposés dans le noyau de rotor (3A) à intervalles dans la direction circonférentielle, **caractérisé en ce que**
des paliers mobiles (B1) sont disposés dans le carter (4) de façon à être disposés à intervalles dans la direction circonférentielle, lesquels paliers mobiles (B1) viennent en contact avec une surface périphérique externe (2S) du premier rotor (2) ; et
des actionneurs (8) sont disposés qui déplacent les paliers mobiles (B1) dans toute direction incluse dans un plan orthogonal à l'axe (Ac),
dans laquelle une surface périphérique interne du stator (1) et une surface périphérique externe (2S) du premier rotor (2) faisant face à la surface périphérique interne depuis une direction radiale de celle-ci s'étendent de façon oblique radialement vers l'intérieur depuis l'extérieur de celle-ci lorsqu'elles approchent d'une première extrémité de l'axe (Ac) depuis une seconde extrémité dans une direction de l'axe (Ac), et dans laquelle la machine tournante électrique (200) à engrenage magnétique inclut en outre un décaleur (8B) de rotor qui décale le premier rotor (2) dans la direction de l'axe (Ac).

2. Machine tournante électrique (100 ; 200) à engrenage magnétique selon la revendication 1,
dans laquelle chacun des paliers mobiles (B1) inclut une portion de support mobile (8A) qui est soutenue de façon à être déplaçable relativement par rapport au carter (4) et une portion roulante (8R) qui est disposée à une extrémité avant de la portion de support mobile (8A) et est mise en rotation lorsqu'elle vient en contact avec la surface périphérique extérieure (2S).

3. Machine tournante électrique (100 ; 200) à engrenage magnétique selon la revendication 1 ou 2, comprenant en outre :
un détecteur d'intervalle (Sg) qui est disposé à l'intérieur du carter (4) et détecte une lame d'air correspondant à une distance de séparation radiale entre le premier rotor (2) et le stator (1) ; et
un dispositif de contrôle (90) qui commande les actionneurs (8) sur la base du résultat de détection du détecteur d'intervalle (Sg).

4. Machine tournante électrique (100 ; 200) à engrenage magnétique selon la revendication 3, dans laquelle le détecteur d'intervalle (Sg) est un capteur capacitif.
